# EUROPEAN PATENT APPLICATION

(11) **EP 4 513 027 A1**
(43) Date of publication of application: **26.02.2025**
(21) Application number: 23382874.8
(22) Date of filing: 25.08.2023
(51) Int. Cl.: F03D 1/06

(54) **POSITIONING SYSTEM AND METHOD**

(71) Applicant: Siemens Gamesa Renewable Energy Innovation & Technology S.L., 31621 Sarriguren (Navarra) (ES)
(72) Inventor: Gaminde Larreta, Beinat, 48360 Mundaka (ES); Gonzalez Vazquez, Francisco Javier, 48920 Portugalete (ES); Iniguez Chacharo, Paula, 26007 Logroño (ES); Orduna Remón, Javier, 31016 Pamplona (ES)
(74) Representative: SGRE-Association

(57) **Abstract**

The invention relates to a positioning system (10) for positioning at least one machine tool (11) along an inner surface (12) of a blade root section (13) of a wind turbine blade (14), comprising at least one trolley (16), at least one guiding rail element (15) for at least partially guiding said trolley along said inner surface (12), and at least one tool carrier (17) for carrying said machine tool (11), wherein said trolley (16) is movably mountable on said guiding rail element (15) such that the trolley (16) is at least partially movable along said guiding rail element (15) and wherein the tool carrier (17) is rigidly mountable on said trolley (16), such that the tool carrier (17) is movable along said guiding rail element (15) by moving the trolley (16) .

## Description

The invention refers to a positioning system for positioning at least one machine tool according to claim 1 and a method for operating a positioning system according to claim 14.

The blade root joint between the wind turbine blade and the nacelle, preferably the blade bearing of the nacelle, is a critical structure of a wind turbine. A damage of said blade root joint may lead to an undesired detachment of the blade from the wind turbine during operation. However, wind turbine blades in operation can develop blade root damage negatively impacting the blade root joint due to different reasons. Those reasons may be related to unfavorable operating conditions of the wind turbine blade leading to high loads in the area of the blade root. However, manufacturing-related or design-related problems may be highly relevant as well.

A reason for failure may be fatigue or damage of blade inserts, which are incorporated into the blade laminates at the blade root and which are commonly distributed around the circumference of the blade root, preferably in equidistant segments. These blade inserts serve to at least partially receive bolts, which again serve to fasten the blade to the blade bearing of the nacelle. It is thus evident that the blade inserts play an essential role with regard to the load transmission between the wind turbine blade and the nacelle, preferably the blade bearing, of the wind turbine.

If fatigue or damage to a blade insert is detected, it is possible to structurally strengthen the wind turbine blade in the related surface area by applying additional reinforcing elements on the inner or outer surface of the wind turbine blade. This allows for preventing the blade root joint from failure and ensuring continued non-destructive operation of the wind turbine.

The application of such reinforcing elements to the wind turbine blade requires high local precision, since exactly the area of the wind turbine blade in which the blade insert is located must be reinforced. The processing steps for preparing the attachment of reinforcing elements, such as the drilling of fastening holes in the surface of the blade, must therefore be carried out with the appropriate precision regarding e.g., the positioning of said fastening holes. The fact that the blade inserts are located inside the blade and are only visible to a limited extent emphasizes this problem, as the identification of the correct drilling position on the wind turbine blade surface is difficult.

As great precision and care is required when repair work is carried out on a blade, a blade is commonly detached from the wind turbine nacelle and brought to the ground to perform such repairs. This requires a great deal of work and high costs, as well as correspondingly long downtimes for the wind turbine.

It is therefore the task of the present invention to at least partially overcome one of the above problems. In particular, it is an object of the present invention to provide a positioning system as well as a method for operating a positioning system which allow for a highly accurate positioning of at least one machine tool in order to perform a machining of the wind turbine blade at different desired machining positions with the required precision, preferably in order to provide strengthening of at least one blade insert of the wind turbine blade, in particular while the wind turbine blade is attached to the wind turbine nacelle.

The above mentioned task is solved by a positioning system for positioning at least one machine tool along an inner surface of a blade root section of a wind turbine blade, comprising at least one trolley, by at least one guiding rail element for at least partially guiding said trolley along said inner surface, and by at least one tool carrier for carrying said machine tool, wherein said trolley is movably mountable on said guiding rail element such that the trolley is at least partially movable along said guiding rail element, and wherein the tool carrier is rigidly mountable on said trolley, such that the tool carrier is movable along said guiding rail element by moving the trolley.

In other words, a positioning system according to the present invention targets the positioning of at least one machine tool along an inner surface of a blade root section of a wind turbine blade. The positioning system comprises at least one, preferably exactly one, trolley, at least one guiding rail element and at least one, preferably exactly one, tool carrier. The guiding rail element is designed to at least partially guide said trolley along a path of motion defined by the guiding rail element which allows to guide the trolley at least partially along the inner surface of the blade root section of the wind turbine. The trolley is designed to be mountable on said guiding rail element, such that the trolley is at least partially movable along said guiding rail element respectively along said path of motion defined by the guiding rail element. Further, the tool carrier is rigidly mountable or mounted on said trolley, such that a movement of said trolley is transferred to the tool carrier.

A positioning system according to the present invention offers the advantage that the machine tool can be positioned with high accuracy along the inner surface of the blade root section of the wind turbine blade. Accordingly, the wind turbine blade laminates of the blade root section can be machined with positional accuracy, e.g., with regard to a drilling and/or threading of fastening holes, preferably in order to subsequently attach reinforcement elements to the blade laminates exactly in the area of a blade insert of the wind turbine blade. Further, the positioning system according to the present invention allows for machining the wind turbine blade with the machine tool while the wind turbine blade is attached to the nacelle, preferably to a blade bearing, of the wind turbine. In other words, the blade does not need to be detached from the wind turbine and brought to ground. This makes it possible to significantly reduce the time and costs required to carry out the above-mentioned repair work and to keep the downtime of the wind turbine as a whole to a minimum.

A machining position is to be understood as a position from which or at which processing respectively machining of the blade is to take place.

At least one machine tool may be a machine tool for drilling and/or threading holes. A machine tool of such kind allows for drilling and/or threading fastening holes into the blade surface, such that afterwards reinforcement elements may be applied and secured to said blade surface. At least one machine tool may be a drilling machine, especially a magnetic drilling machine. Furthermore, at least one machine tool can be a battery-powered machine tool.

More than one trolley and/or guiding rail element and/or tool carrier may be comprised. Features described with regard to a trolley may also apply to at least one other trolley. Features described with regard to a guiding rail element may also apply to at least one other guiding rail element. Features described with regard to a tool carrier may also apply to at least one other tool carrier.

The tool carrier and the trolley may be designed as separate parts. This offers the advantage of a modular approach which for example allows for modifications on one component while keeping the other component as it is. Further a transport of the positioning system may be facilitated. Also, for example different tool carriers may be used with a single trolley. Alternatively, the tool carrier and the trolley may be designed as an integral component. This allows for a strong and reliable connection between both components which again may result in a higher accuracy when machining the blade surface with a machine tool positioned on the tool carrier due to a higher structural integrity.

With regard to the present invention, it may be advantageous that at least one guiding rail element is formed as a ring or ring segment extending along a circumferential direction between an inner radius and an outer radius. Wind turbine blades usually have a circular cross-section at least in the area of the attachment to the nacelle, respectively the blade root section. Therefore, a guiding rail segment formed as a ring or ring segment allows for easily guiding the trolley parallel or essentially parallel to the inner surface of the blade root section of the wind turbine blade. The radius of the ring segment may be adapted to the diameter of the blade root section, such that the trolley and/or the tool carrier are guided along the blade surface with a suitable distance between the inner surface of the wind turbine blade and the trolley respectively tool carrier. In this context, it may be provided that, when the trolley is mounted on the guiding rail element, the trolley is movable along said guiding rail element in a plane extending between said inner radius and said outer radius along said circumferential direction. Such an alignment of the trolley on the guiding rail element has proven to be advantageous with regard to an alignment of the tool carrier or the machine tool mounted on it relative to the inner surface of the blade root section of the wind turbine blade.

With regard to the present invention, it is further conceivable that at least one guiding rail element comprises at least one connection interface for connecting said guiding rail element to at least one additional guiding rail element, wherein preferably at least one connection interface is designed as a dove tail or a dove tail cut-out. Accordingly, the guiding rail element can be connected to at least one additional guiding rail element to extend the guiding rail element, preferably along a circumferential direction, and extend the path of motion of the trolley in order to make a larger part of the inner blade surface accessible for machining by the machine tool. The design of a connection interface as a dove-tail or dove-tail cut-out has proven to be advantageous with regard to easily establishing and releasing a connection between two guiding rail segments. It may be provided that at least one guiding rail segment comprises at least two or exactly two connection interfaces, wherein one connection interface is designed as a dove tail and the other connection interface is designed as a dove tail cut-out. The connection interfaces may be provided at opposite ends of the guiding rail element, preferably with regard to an extension of said guiding rail element along a circumferential direction. This enables a puzzle-like connection of several guiding rail elements to a common guiding rail.

It may further be provided that a plurality of guiding rail elements is comprised, wherein each guiding rail element of said plurality of guiding rail elements is connected to at least one other guiding rail element of said plurality of guiding rail elements via at least one connection interface to form a continuous guiding rail. In other words, several guiding rail elements can be included, each of which can be connected to at least one other guiding rail element via at least one connection interface to form a continuous guiding rail for the trolley. The multi-piece design simplifies the handling and transport of the guiding rail. In the case that multiple guiding rail elements are comprised, it may be provided that all guiding rail elements are of a same or essentially same design in order to provide for a continuous movement of the trolley along different guiding rail elements.

It may optionally be provided that at least one guiding rail segment covers an angular segment of at least 20°, in particular at least 30° or at least 40°, with respect to its extension along the circumferential direction. Additionally or alternatively, all guiding rail segments, when connected to each other, may cover an angular segment of at least 180°, preferably at least 270° or 360° with regard to their cumulative extension along the circumferential direction.

It may be provided in the context of the present invention that least one guiding rail element comprises at least one groove and that at least one trolley comprises at least one engaging element, wherein said engaging element is designed to at least partially engage said groove when said trolley is mounted on said guiding rail element. In other words, it may be provided that the trolley is mountable on said guiding rail by at least partially engaging at least one engaging element of the trolley into at least one groove of the guiding rail element, such that an at least partial form fit between the trolley and the guiding rail element is established. This offers the advantage of a secure fit of the trolley on the guiding rail element and a secure and reliable guiding of the trolley along the guiding rail element. In this context, it may be provided that at least one groove is formed in an inner end face of the guiding rail element and/or along an inner radius of the guiding rail element. Additionally or alternatively, it may be provided that at least one groove is formed in an outer end face of the guiding rail element and/or along an outer radius of the guiding rail element. Such an arrangement of the grooves has proven to be advantageous with regard to a secure hold of the trolley on the guiding rail element. Additionally or alternatively, it may be provided that at least one groove extends completely or essentially completely along the extension of the guiding rail element along a circumferential direction. With regard to the term "completely", any continuations of the guiding rail element, which, for example, only serve to connect with other guiding rail elements, may be neglected. The focus here is on ensuring that the trolley can be moved as completely as possible along the, preferably circumferential, extension of the element.

With regard to the present invention, it may be provided that at least one engaging element comprises at least one contacting means for contacting the guiding rail element at least temporarily, in particular when the trolley is mounted on the guiding rail. This allows to compensate for manufacturing tolerances and enables to achieve a secure fit of the trolley to the guiding rail. Thus, a defined movement of the trolley along the guiding rail element and/or a reliable fixation of the trolley on the guiding rail element can be improved. It may be provided that by said contacting means, a clearance between the trolley, preferably the engaging element, and the guiding rail element is at least partially adjustable and/or can be bridged. Clearance means a gap between the trolley, preferably the engaging element, and the guiding rail which allows for an undesired relative movement of the trolley, respectively the engaging element, to the rail. Therefore, said clearance may lead to inaccuracies with respect to a positioning of the machine tool. It may be provided that the contacting means is designed for contacting the rail outside of the groove in which the engaging element is at least partially inserted. At least one contacting means may comprise a holding recess, in particular a threaded recess, and/or a screw, the screw being screwable into the holding recess so as to at least partially contact the guiding rail element.

Additionally or alternatively, it may further be provided that least one engaging element comprises an adjustment mechanism, wherein an engagement depth of said engaging element in said groove is at least partially variable. For example, by said adjustment mechanism, the engagement element can at least partially be inserted into the groove to such an extent that it comes into contact, at least in sections, with an end face of the groove. This allows for establishing a defined fit of the trolley to the guiding rail element. Further, said adjustment mechanism makes it possible to compensate for any manufacturing tolerances and thus ensure a secure and low-tolerance connection of the trolley as well as good force transmission between the components concerned during any use of the machine tool. The adjustment mechanism may comprise at least one adjustment element, preferably a screw, wherein by moving said adjustment element, preferably by turning said screw, an engagement depth of the engaging element is adjustable. In other words, the adjustment element may at least comprise a first engagement element part and a second engagement element part and at least one adjustment element, wherein the distance between the first engagement element part and the second engagement element part is at least partially adjustable by said adjustment element, and wherein by adjusting the distance between the first engagement element part and the second engagement element part, an engagement depth of the engagement element in said groove of the guiding rail element is at least partially adjustable.

Further, it is conceivable with regard to the present invention that at least one engaging element and/or at least one groove is at least partially made from and/or covered with a friction reducing material, preferably a plastic, to reduce friction between the engaging element and the guiding rail element when the trolley is moved along said guiding rail element. A reduction of friction may refer to a comparison with a metal-on-metal, preferably steel-on-steel friction. This offers the advantage of an easier movement of the trolley along the guiding rail element. Said friction reducing material may for example be Polytetrafluoroethylene (Teflon) and/or Acrylonitrile butadiene styrene (ABS).

It may further be provided that said trolley and/or said tool carrier comprise at least one fixation means, wherein said guiding rail element comprises at least one fixation recess and wherein, when said trolley is mounted on said guiding rail element, at least one fixation means is at least partially introducible into said fixation recess to fix said trolley to said guiding rail element in at least one machining position, such that a movement of said trolley relative to said guiding rail element is prevented. At least one fixation means may comprise a holding recess, in particular a threaded recess, and/or a screw. The holding recess is being designed to be brought at least partially into coverage with a fixation recess of the guiding rail element, and the screw is screwable into the holding recess so as to at least partially extend through the holding recess into the fixation recess of the guiding rail element. It may be provided that at least one fixation recess of the guiding rail element does not completely penetrate the material of the guiding rail element, so that the screw can come to rest on a bottom of the fixation recess, thereby allowing a bracing between the guiding rail element and the trolley respectively the guiding rail element and the tool carrier.

Additionally or alternatively, it may be provided that said guiding rail element comprises at least one fixation recess, preferably at least one group of fixation recesses, to at least partially receive at least one fixation means of said trolley and/or said tool carrier. Preferably, the recesses of at least one group of recesses may be arranged along a circular arc, preferably in equidistant angular intervals. The circular arc may be provided with a radius which lies between the inner and outer radius of the guiding rail segment. This allows defined positions to be specified for fixing the trolley along the guiding rail segment. In particular, the angular distances between the recesses can be selected in such a way that once the trolley or the machine tool has been correctly aligned with a blade insert of the blade root, each displacement of the trolley by an angular segment specified by the recesses automatically leads to correct positioning of the machine tool with another blade insert. This ensures a precise positioning of the machine tool via a defined displacement of the trolley. At the same time, only one recess of the guiding rail element has to be correctly aligned with a blade insert in order to automatically ensure correct positioning of the machine tool for all blade inserts.

With regard to the present invention, it may be advantageous that said tool carrier comprises at least one receiving section for at least partially receiving the machine tool, wherein preferably at least one receiving section extends at least partially perpendicular to a circumferential direction respectively circumferential extension of said guiding rail element. This orientation has proven to be advantageous with regard to machining of the wind turbine blade surface by the machine tool. It may be provided that the receiving section extends parallel or essentially parallel to a longitudinal extension of the wind turbine blade. This refers to a proposed use of the positioning system in a wind turbine blade.

At least one receiving section may be provided on a side of the tool carrier facing away from the blade surface. This allows for the tool carrier to be positioned close to the blade surface and thus allows a good accessibility of the wind turbine blade surface by a tool of the machine tool. At least one receiving section may be provided as a plane, preferably metallic and/or magnetic, surface. This has in particular proven to be an advantage when magnetic machine tools are used, as a secure and safe fit of the machine tool to the tool carrier can be established. However, at least one receiving section may also comprise at least one fastening means such as a threaded recess in order to secure at least one machine tool with at least one fastening means such as a screw.

It may further be provided that said tool carrier comprises at least one tooling recess for passing at least one tool of the machine tool at least partially through the tool carrier. It may be provided that the tool carrier comprises a plurality of tooling recesses. By using tooling recesses, machining positions on the inner surface of the wind turbine blade may be at least partially predefined with regard to their positioning relative to each other. Therefore, the positional accuracy with regard to performing machining operations on the wind turbine blade surface can be increased. It may be provided that at least one tooling recess is formed in the same plane as at least one receiving section. Additionally or alternatively, a center axis of at least one tooling recess may extend perpendicular or essentially perpendicular to a center axis of at least one guiding rail element. The center axis of the guiding rail element may relate to a rotational axis of said guiding rail element. Additionally or alternatively, it may be provided that a center axis of at least one tooling recess extends perpendicular or essentially perpendicular to a longitudinal extension of the wind turbine blade. This refers to an intended use of the positioning system in a wind turbine blade.

Additionally or alternatively, said tool carrier may comprise at least one guiding adapter for additionally guiding at least one tool of the machine tool after passing said tool through said tooling recess. By means of a guiding adapter, a tool of the machine tool, for example a drill, may be prevented from running on the blade surface and thus, the precision of the machining may increased.

Further, it may be provided that said tool carrier and/or the trolley comprises at least one contacting means for contacting the inner surface of the wind turbine blade at least temporarily, in particular when the trolley is fixed in a machining position. By supporting the tool carrier on the blade surface at least during a machining process, the tool carrier can be secured against unintentional movement and/or bending during machining of the surface with the machine tool, and the positional accuracy of the machining can thus be increased. At least one contacting means may comprise a holding recess, in particular a threaded recess, and/or a screw, the screw being screwable into the holding recess so as to at least partially contact the inner surface of the wind turbine blade.

It is conceivable with regard to the present invention that said tool carrier comprises at least one stabilization fin for absorbing bending moments introduced into the tool carrier when operating the machine tool. This offers the advantage to secure the tool carrier against unintentional bending during machining of the surface with the machine tool, and the positional accuracy of the machining can thus be increased.

It may be provided with regard to the present invention that at least one positioning aid is comprised, wherein said positioning aid is designed to indicate the position, preferably the center, of at least one blade insert of the blade root section, while the wind turbine blade is attached to the nacelle, respectively blade bearing of the wind turbine. The positioning aid may therefore be used to identify the exact position of the center of at least one blade insert of the wind turbine blade. Taking this position into account, the guiding rail element can be positioned accordingly in order to ensure a correct positioning of the trolley respectively the machine tool. Afterwards the trolley may be moved along the guiding rail in defined circumferential segments in order to move the machine tool to another blade insert and still ensure a correct and precise positioning.

At least one positioning aid may comprise at least one centering portion, the centering portion comprising at least two centering recesses, wherein each of the two centering recesses is designed to at least partially receive a bolt, wherein said bolt is at least partially inserted in a blade insert of the wind turbine blade. This refers to an intended use of the positioning system in a wind turbine. The at least two centering recesses may be positioned in a common plane. Additionally or alternatively, at least one positioning aid may comprise at least one indication portion, the indication portion preferably comprising a pointed end, wherein the tip of said pointed end is, at least with regard to a circumferential direction, aligned with the center of at least one centering recess. This allows for a precise indication of a center of a bolt received in said centering recess and therefore also for an indication of the center of the blade insert. The indication portion may extend parallel or essentially parallel to the centering portion. Additionally or alternatively, at least one positioning aid may comprise at least one distance portion in order to provide a distance between at least one centering recess and the indication portion. The distance portion may extend perpendicular or essentially perpendicular to the centering portion and/or the indication portion. Additionally or alternatively, at least one positioning aid may comprise at least one indication means, wherein said indication means is at least partially insertable into at least one recess, preferably a fixation recess, of the guiding rail element, in order to indicate a correct positioning of said guiding rail element, preferably at least with regard to a circumferential and/or radial direction. The indication means may comprise a pin and/or an indication recess, wherein preferably the center of said indication recess is aligned with the tip of the pointed end, at least with regard to a circumferential direction.

The above-mentioned task is also solved by a method for using a positioning system according to the invention, preferably according to any of claims 1-14, on a wind turbine, wherein the wind turbine comprises a nacelle and at least one wind turbine blade, wherein said wind turbine blade is connected to the nacelle via a blade bearing, preferably pitch bearing, wherein at least the following steps are performed, preferably in the following order:
- attaching the guiding rail element to the blade bearing,
- mounting the trolley on said guiding rail element,
- moving the trolley at least partially along said guiding rail element in a machining position.

The method provides the same advantages as have already been described with regard to the positioning system.

Attaching a guiding rail element may comprise attaching the guiding rail element to a collar of said blade bearing, wherein preferably, said collar extends perpendicular or essentially perpendicular to the longitudinal extension of said wind turbine blade, in particular such that the guiding rail element faces an inside of said wind turbine blade.

It may be provided in the context of the present invention that a method comprises at least one of the following steps:
- At least temporarily fixing said trolley to said guiding rail element in at least one machining position, such that a movement of said trolley relative to said guiding rail element is prevented, preferably by at least partially introducing at least one fixation means of the trolley or the tool carrier into a fixation recess of the guiding rail element,
- at least temporarily contacting the inner surface of the wind turbine blade when the trolley is fixed in a machining position, preferably by a contacting means of the tool carrier, and
- using at least one positioning aid for aligning at least one fixing recess of the guiding rail element with the center of at least one blade insert of the wind turbine blade, at least with regard to a circumferential position of the center of the blade insert and the center of the fixation recess.

Further advantages, features and details of the invention will be apparent from the following description, in which several embodiments of the invention are described in detail with reference to the drawings. In this regard, the features mentioned in the claims and in the description may each be essential to the invention individually or in any combination.
- Fig. 1: shows a schematic view of a blade root section,
- Fig. 2: shows a schematic view of a positioning system,
- Fig. 3: shows a schematic view of a guiding rail element,
- Fig. 4: shows a schematic view of a trolley,
- Fig. 5: shows a schematic view of an assembly comprising a guiding rail element and a trolley,
- Fig. 6: shows a schematic view of an engaging element,
- Fig. 7: shows a schematic view of a tool carrier,
- Fig. 8: shows a schematic view of an assembly comprising a guiding rail element, a trolley and a tool carrier,
- Fig. 9: shows a schematic view of a tool carrier,
- Fig. 10: shows a schematic view of a positioning aid,
- Fig. 11: shows a schematic view of an intended use of a positioning aid,
- Fig. 12: shows a schematic view of an intended use of a positioning aid and
- Fig. 13: shows a schematic view of a method.

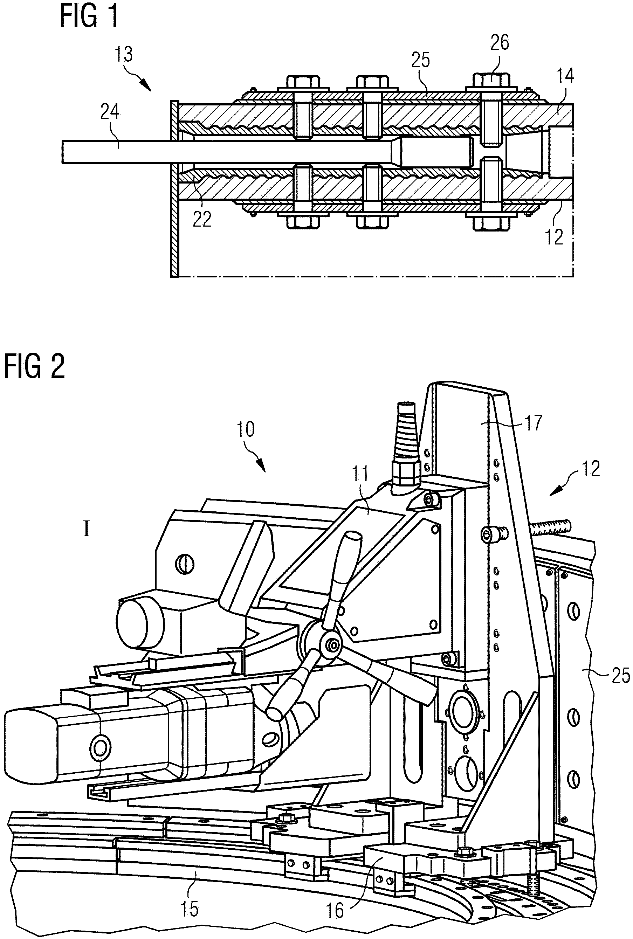

Fig. 1 shows a schematic view of a wind turbine blade root section 13. As can be seen, a blade insert 22 is incorporated into the blade laminates at the blade root. Although only one blade insert 22 is shown here, it is to be understood that several of these blade inserts 22 are distributed around the circumference of the blade root section 13. The blade insert 22 serves to at least partially receive a bolt 24, which again serves to fasten the wind turbine blade 14 to a blade bearing 23 of the nacelle of the wind turbine.

In a case where the blade laminates in the region of the blade insert 22 or the blade insert 22 itself is damaged, a blade root damage may occur which may have fatal consequences such as a detachment of the wind turbine blade 14 from the wind turbine. In case that damage or fatigue in said areas of the wind turbine blade 14 is detected, it is possible to structurally strengthen the wind turbine blade 14 in the related surface area by applying additional reinforcing elements 25 on the inner or outer surface of the wind turbine blade 14. This allows for preventing the blade root joint from failure and ensures continued non-destructive operation of the wind turbine.

The application of such reinforcing elements 25 to the wind turbine blade 14 requires high local precision, since exactly the area of the wind turbine blade in which the blade insert 22 is located must be reinforced. As can be seen from fig. 1, the reinforcement elements 25 can for example be bonded to the inner surface 12 of the wind turbine blade 14 and damaged blade inserts 22 can for example be attached to the reinforcement elements 25 by means of screws 26 in order to securely attach said blade inserts 22 to the wind turbine blade 14. The processing steps for preparing the attachment of said reinforcing elements, such as the drilling of fastening holes for receiving the screws 26, must therefore be carried out with the appropriate precision regarding e.g., the positioning of said fastening holes on the blade surface. The fact that the blade inserts 22 are located inside the shell of the wind turbine blade 14 and are only visible to a limited extent emphasizes this problem, as the identification of the correct drilling position on the wind turbine blade surface is difficult, especially when the wind turbine blade 14 is attached to the nacelle.

Fig. 2 shows a schematic view of a positioning system 10 for positioning at least one machine tool 11 along an inner surface 12 of a blade root section 13 of a wind turbine blade 14. The positioning system 10 comprises at least one trolley 16, at least one guiding rail element 15 for at least partially guiding said trolley 16 along said inner surface 12, and at least one tool carrier 17 for carrying said machine tool 11. The trolley 16 is movably mountable on said guiding rail element 15 such that the trolley 16 is at least partially movable along said guiding rail element 15, wherein the tool carrier 17 is rigidly mountable on said trolley 16, such that the tool carrier 17 is movable along said guiding rail element 15 by moving the trolley 16.

A rigid connection between the tool carrier 17 and the trolley 16 may for example be provided by one or more screws.

A positioning system 10 according to the present invention offers the advantage that the machine tool 11 can be positioned with high accuracy along the inner surface 12 of the blade root section 13 of the wind turbine blade 14. Accordingly, the wind turbine blade laminates of the blade root section 13 can be machined with positional accuracy, e.g., with regard to a drilling and/or threading of fastening holes, preferably in order to subsequently attach reinforcement elements 25 to the blade laminates exactly in the area of a blade insert of the wind turbine blade. Further, the positioning system 10 according to the present invention allows for machining the wind turbine blade 14 with the machine tool 11 while the wind turbine blade 14 is still attached to the nacelle, preferably to a blade bearing, of the wind turbine. In other words, the wind turbine blade 14 does not need to be detached from the wind turbine and brought to ground. This makes it possible to significantly reduce the time and costs required to carry out the above-mentioned repair work and to keep the downtime of the wind turbine as a whole to a minimum.

In fig. 2, the machine tool 11 and/or the trolley 16 is shown in a machining position I, meaning a position at which machining of the blade is to be performed. With regard to fig. 1, the machine tool 1 is a magnetic drilling machine. The different components of the positioning system 10 will be described in detail in the following.

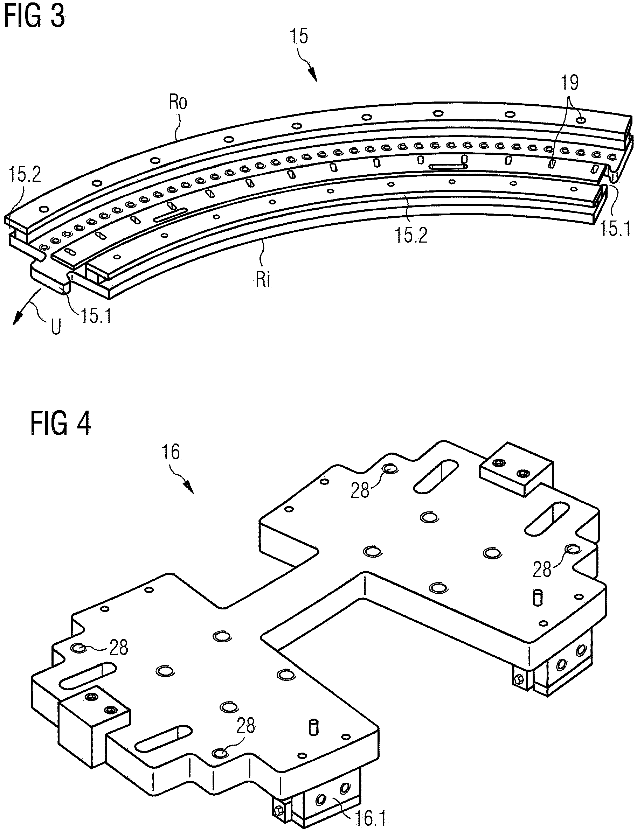

Fig. 3 shows a schematic view of a guiding rail element 15. It can be seen that the guiding rail element 15 is formed as a ring segment extending along a circumferential direction U between an inner radius Ri and an outer radius Ro. Wind turbine blades 14 usually have a circular cross-section at least in the area of the attachment to the nacelle, respectively the blade root section 13. Therefore, a guiding rail element 15 formed as a ring or ring segment allows for easily guiding the trolley 16 parallel or essentially parallel to the inner surface 12 of the blade root section 13 of the wind turbine blade 14.

Further, it becomes clear from fig. 3 that the guiding rail element 15 comprises a connection interface 15.1 at each of its ends with regard to its extension along the circumferential direction U. In other words, the guiding rail element 15 comprises two connection interfaces 15.1. One connection interface 15.1 is designed as a dove tail, and the other connection interface 15.1 is designed as a dove tail cut-out. The connection interfaces are provided at opposite ends of the guiding rail element 15 with regard to an extension of said guiding rail element 15 along the circumferential direction U. This enables a puzzle-like connection of several guiding rail elements 15 to a common guiding rail.

Fig. 4 shows a schematic view of a trolley 16. From fig. 3 and fig. 4, it can be seen that the guiding rail element 15 comprises at least one groove 15.2, and that the trolley 16 comprises at least one engaging element 16.1, wherein said engaging element 16.1 is designed to at least partially engage said groove 15.2 when said trolley 16 is mounted on said guiding rail element 15.

It can be seen from fig. 3 that the guiding rail element 15 comprises two grooves 15.2 wherein a first groove 15.2 is formed in an inner end face of the guiding rail element 15 extending along an inner radius Ri of the guiding rail element 15. A second groove 15.2 is formed in an outer end face of the guiding rail element 15 extending along an outer radius Ro of the guiding rail element 15. Such an arrangement of the grooves 15.2 has proven to be advantageous with regard to a secure hold of the trolley 16 on the guiding rail element 15.

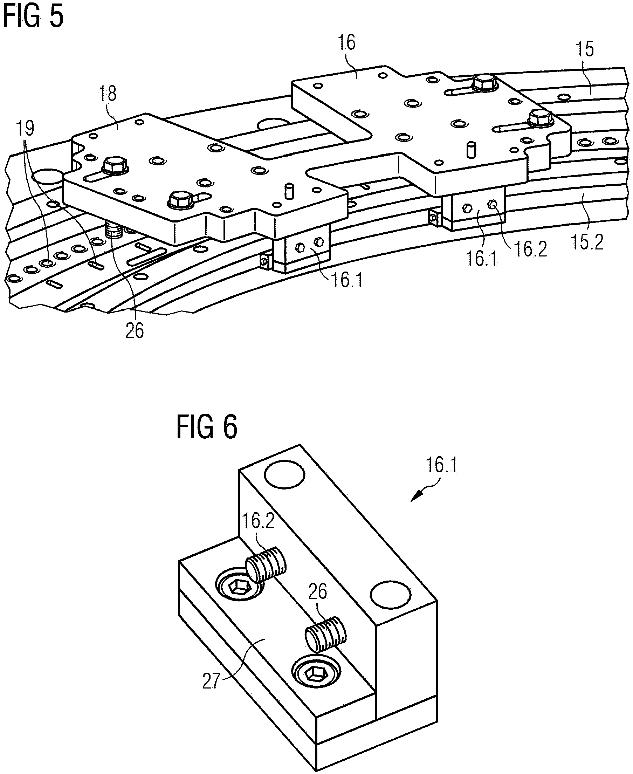

In order to emphasize an arrangement of the trolley 16 on the guiding rail element 15, fig. 5 shows a schematic view of an assembly of trolley 16 and a guiding rail element 15. It can be seen that the trolley 16 is arranged on the guiding rail element 15 such that the engaging elements 16.1 at least partially engage into the groove 15.2. This offers the advantage that at least a partial form fit between the trolley 16 and the guiding rail element 15 is established which allows for a secure fit of the trolley 16 on the guiding rail element 15 and a secure and reliable guiding of the trolley 16 along the guiding rail element 15.

Fig 6 shows a schematic view of an engaging element 16.1. The engaging element 16.1 comprises at least one contacting means 16.2 for contacting the guiding rail element 15 at least temporarily when the trolley 16 is mounted on said guiding rail element 15. This allows to compensate for manufacturing tolerances and enables to achieve a secure fit of the trolley 16 to the guiding rail element 15. Thus, a defined movement of the trolley 16 along the guiding rail element 15 and/or a reliable fixation of the trolley on the guiding rail element can be improved. In particular, it is provided that by said contacting means 16.2, a clearance between the engaging element 16.1 and the guiding rail element 15 can be bridged. The contacting means comprises a holding recess, in particular a threaded recess, and a screw 26, the screw 26 being screwable into the holding recess so as to at least partially contact the guiding rail element 15.

Further, it is shown in fig. 6 that the engaging element 16.1 is at least partially covered with a friction reducing material 27. This offers the advantage of an easier movement of the trolley 16 along the guiding rail element 15. The friction reducing material is provided as ABS.

It can be seen from figs. 3 and 5 that the trolley 16 comprises at least one fixation means 18, wherein said guiding rail element 15 comprises at least one fixation recess 19 and wherein when said trolley 16 is mounted on said guiding rail element 15, at least one fixation means 18 being at least partially introducible into said fixation recess 19 to fix said trolley 16 to said guiding rail element 15 in at least one machining position I. Thereby, a movement of said trolley 16 relative to said guiding rail element 15 is preventable. At least one fixation means 18 may comprise a holding recess 28, in particular a threaded recess, and a screw 26. The holding recess 28 is being designed to be brought at least partially into coverage with a fixation recess 19 of the guiding rail element 15 such that the screw 26 can be screwed into the holding recess 28 so as to at least partially extend through the holding recess 28 into the fixation recess 19 of the guiding rail element 15.

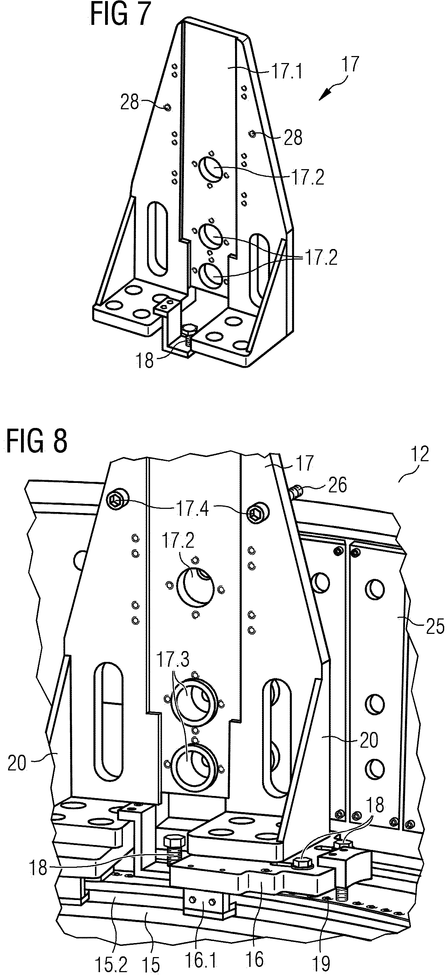

Fig. 7 shows a schematic view of a tool carrier 17.

Fig. 8 shows a schematic view of an assembly comprising a guiding rail element 15, a trolley 16 and a tool carrier 17. The tool carrier 17 comprises at least one receiving section for at least partially receiving the machine tool 11. The receiving section 17.1 extends at least partially perpendicular to a circumferential extension U of said guiding rail element 15. This orientation has proven to be advantageous with regard to machining of the wind turbine blade's inner surface 12 by the machine tool 11. The receiving section 17.1 extends parallel or essentially parallel to a longitudinal extension of the wind turbine blade 14. This refers to an intended use of the positioning system 10 in a wind turbine blade 14.

It is shown in fig. 8 that the receiving section 17.1 is provided on a side of the tool carrier 17 facing away from the inner blade surface 12. This allows for the tool carrier 17 to be positioned close to the inner blade surface 12, and thus, a good accessibility of the wind turbine's inner blade surface 12 by a tool of the machine tool 11 can be achieved. The receiving section is provided as a plane and magnetic surface. This has in particular proven to be an advantage when magnetic machine tools 11 are used, as a secure and safe fit of the machine tool to the tool carrier 17 can be established (see fig. 2).

According to figs. 7 and 8, the tool carrier 17 comprises at least one tooling recess 17.2 for passing at least one tool of the machine tool 11 at least partially through the tool carrier 17. By using tooling recesses 17.2, machining positions I on the surface of the wind turbine blade may be at least partially predefined with regard to their positioning relative to each other. Therefore, the positional accuracy with regard to performing machining operations on the wind turbine blade's inner surface 12 can be increased.

It can be seen from fig. 8 that the tool carrier 17 comprises at least one guiding adapter 17.3 for additionally guiding at least one tool of the machine tool 11 after passing said tool through said tooling recess 17.2. By means of a guiding adapter 17.3, a tool of the machine tool, for example a drill, may be prevented from running on the inner blade surface 12 and thus increase the precision of the machining.

Further, it is shown in fig. 8 that the tool carrier 17 comprises at least one contacting means 17.4 for contacting the inner surface 12 of the wind turbine blade 14 at least temporarily when the trolley 16 is fixed in a machining position I. By supporting the tool carrier 17 on the inner blade surface 12, at least during a machining process, the tool carrier 17 can be secured against unintentional movement and/or bending during machining of the inner surface 12 with the machine tool 11, and the positional accuracy of the machining can thus be increased. At least one contacting means comprises a holding recess 28, in particular a threaded recess, and a screw 26, wherein the screw 26 can be screwed into the holding recess so as to at least partially contact the inner surface 12 of the wind turbine blade 14.

According to fig. 8, said tool carrier 17 comprises at least one stabilization fin 20 for absorbing bending moments introduced into the tool carrier 17 when operating the machine tool 11. This offers the advantage to secure the tool carrier 17 against unintentional bending during machining of the inner surface 12 with the machine tool 11, and the positional accuracy of the machining can thus be increased.

It can be seen from figs. 3, 7 and 8 that the tool carrier 17 comprises at least one fixation means 18, wherein said guiding rail element comprises at least one fixation recess 19 and wherein, when said trolley 16 is mounted on said guiding rail element 15, at least one fixation means 18 is at least partially introducible into said fixation recess 19 to fix said trolley 16 to said guiding rail element 15 in at least one machining position I, such that a movement of said trolley 16 relative to said guiding rail element 15 is preventable.

Further, it can be seen from figs. 3, 5 and 8 that the guiding rail element 15 comprises at least one group of fixation recesses 19, to at least partially receive at least one fixation means 18 of said trolley 16 and/or said tool carrier 17. The fixation recesses 19 of at least one group of fixation recesses 19 are arranged along a circular arc in equidistant angular intervals. The circular is provided with a radius which lies between the inner radius Ri and the outer radius Ro of the guiding rail element 15. This allows defined positions to be specified for fixing the trolley 16 along the guiding rail element 15.

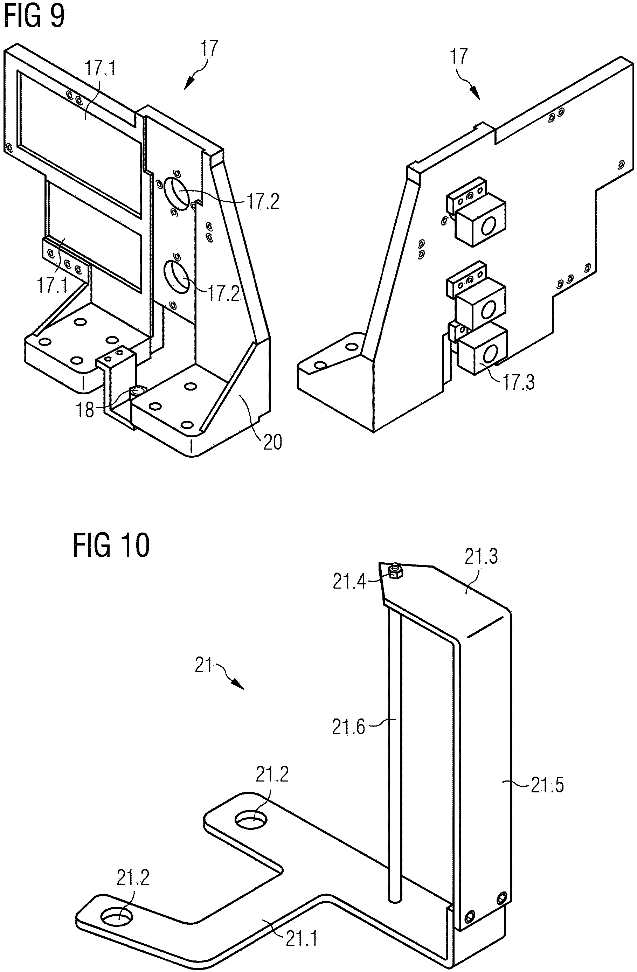

Fig. 9 shows a schematic view of an alternative embodiment of a tool carrier 17 from two different perspectives, the tool carrier 17 having essentially the same features as already described with regard to figs. 7 and 8.

Fig. 10 shows a schematic view of a positioning aid 21. Said positioning aid 21 is designed to indicate the position, preferably the center, of at least one blade insert 22 of the blade root section 13. The positioning aid 21 may therefore be used to identify the exact position of the center of at least one blade insert 22 of the wind turbine blade 14. Taking this position into account, the guiding rail element 15 can be positioned accordingly in order to ensure a correct positioning of the trolley 16 respectively the machine tool 11. Afterwards, the trolley 16 may be moved along the guiding rail 15 in defined circumferential segments which are preferably defined by fixation recesses 19, in order to move the machine tool 11 to another blade insert 22 respectively machining position I and still ensure a correct and precise positioning.

The positioning aid 21 comprises a centering portion 21.1, the centering portion 21.1 comprising at least two centering recesses 21.2, wherein each of the two centering recesses 21.2 is designed to at least partially receive a bolt 24, wherein said bolt 24 is at least partially inserted in a blade insert 22 of the wind turbine blade 14. This refers to an intended use of the positioning system in a wind turbine.

The centering recesses 21.2 are positioned in a common plane.

The positioning aid 21 further comprises an indication portion, and the indication portion comprising a pointed end 21.4, wherein the tip of said pointed end 21.4 is, at least with regard to a circumferential direction U, aligned with the center of at least one centering recess 21.2. This allows for a precise indication of a center of a bolt 24 received in said centering recess 21.2 and therefore also for an indication of the center of the blade insert 22. The indication portion 21.3 may extend parallel or essentially parallel to the centering portion 21.1.

Also, the positioning aid 21 comprises a distance portion 21.5 in order to provide a distance between at least one centering recess 21.2 and the indication portion 21.3. The distance portion 21.5 extends perpendicular or essentially perpendicular to the centering portion 21.1 and the indication portion 21.3.

It can be seen from fig. 10 that the positioning aid 21 comprises an indication means 21.6, wherein said indication means 21.6 is at least partially insertable into at least one fixation recess 19, preferably a fixation recess 19, of the guiding rail element, in order to indicate a correct positioning of said guiding rail element, preferably at least with regard to a circumferential and/or radial direction. The indication means 21.6 may comprise a pin and an indication recess, wherein preferably the center of said indication recess is aligned with the tip of the pointed end at least with regard to a circumferential direction. The indication pin is at least partially introducible into said indication recess and a fixation recess of the guiding rail element 15 in order to ensure a correct positioning of said guiding rail element 15 with respect to at least one blade insert 22.

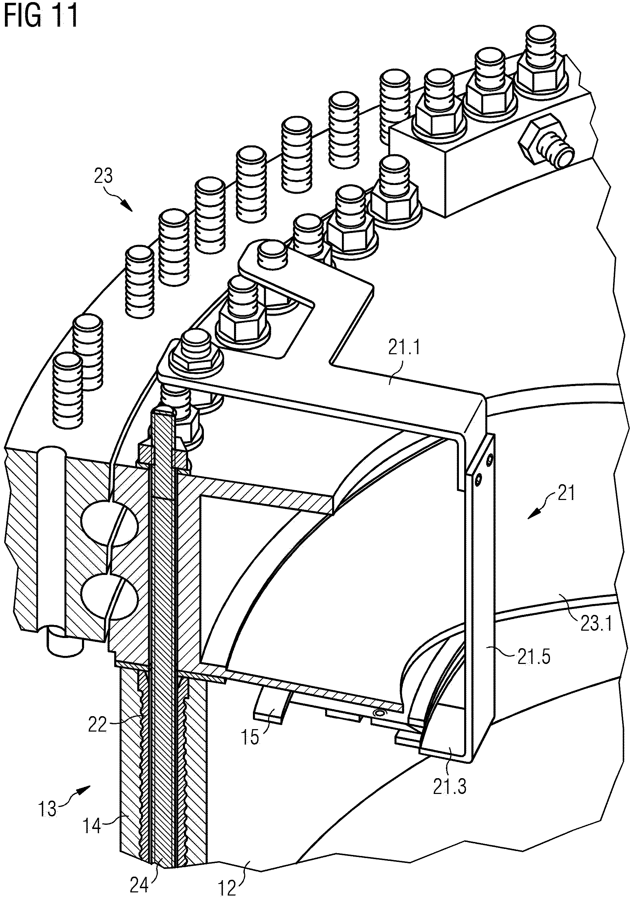

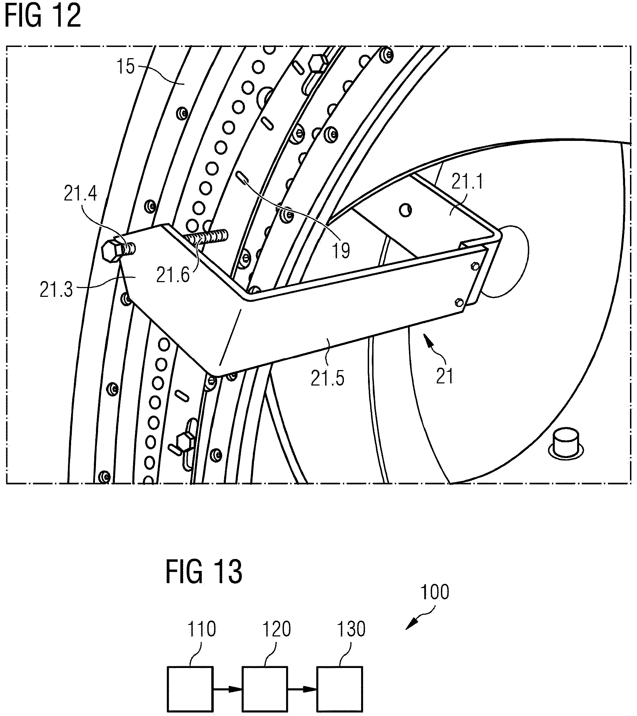

The intended use of a positioning aid 21 is emphasized in figs. 11 and 12 which show the positioning of a guiding rail element 15 with respect to at least one blade insert 22 using a positioning aid 21. The positioning aid 21 is used to receive two bolts 24 in the centering recesses 21.2. The bolts 24 are used to secure the wind turbine blade 14 to a blade bearing 23. By doing so, the pointed end of the indication portion 21.3 is aligned with the center of at least one bolt 24 and therefore also aligned with the center of at least one blade insert 22. The indication means 21.6 can then be used to ensure a correct positioning of the guiding rail element 15 on a collar 23.1 of the blade bearing relative to the positioning aid 21, which simultaneously ensures a correct positioning of the guiding rail element 15 relative to the blade insert 22, in order to allow for an accurate positioning of the machine tool 11.

Fig. 13 shows a schematic view of a method 100 for using a positioning system 10on a wind turbine, wherein the wind turbine comprises a nacelle and at least one wind turbine blade 14, wherein said wind turbine blade 14 is connected to the nacelle via a blade bearing 23, wherein at least the following steps are performed, preferably in the following order:
- attaching 110 the guiding rail element 15 to the blade bearing 23,
- mounting 120 the trolley 16 on said guiding rail element 15 and
- moving 130 the trolley 16 at least partially along said guiding rail element 15 in a machining position I.

## Claims

1. Positioning system (10) for positioning at least one machine tool (11) along an inner surface (12) of a blade root section (13) of a wind turbine blade (14), comprising at least one trolley (16), at least one guiding rail element (15) for at least partially guiding said trolley along said inner surface (12), and at least one tool carrier (17) for carrying said machine tool (11), wherein said trolley (16) is movably mountable on said guiding rail element (15) such that the trolley (16) is at least partially movable along said guiding rail element (15) and wherein the tool carrier (17) is rigidly mountable on said trolley (16), such that the tool carrier (17) is movable along said guiding rail element (15) by moving the trolley (16).

2. Positioning system (10) according to claim 1,
**characterized in that,**
at least one guiding rail (15) is formed as a ring or ring segment extending along a circumferential direction (U) between an inner radius (Ri) and an outer radius (Ro), wherein preferably, when said trolley (16) is mounted on said guiding rail element (15), said trolley is movable in a plane extending between said inner radius (Ri) and said outer radius (Ro) along said circumferential direction (U).

3. Positioning system (10) according to any of the previous claims,
**characterized in that,**
at least one guiding rail element (15) comprises at least one connection interface (15.1) for connecting said guiding rail element (15) to at least one additional guiding rail element (15), wherein preferably at least one connection interface (15.1) is designed as a dove tail or a dove tail cut-out.

4. Positioning system (10) according to claim 3,
**characterized in that,**
a plurality of guiding rail elements (15) is comprised, wherein each guiding rail element (15) of said plurality of guiding rail elements (15) is connected to at least one other guiding rail element (15) of said plurality of guiding rail elements (15) via at least one connection interface (15.1) to form a continuous guiding rail.

5. Positioning system (10) according to any of the previous claims,
**characterized in that,**
at least one guiding rail element (15) comprises at least one groove (15.2) and that at least one trolley (16) comprises at least one engaging element (16.1), wherein said engaging element (16.1) is designed to at least partially engage said groove (15.2) when said trolley (16) is mounted on said guiding rail element (15).

6. Positioning system (10) according to claim 5,
**characterized in that,**
at least one engaging element (16.1) comprises at least one contacting means (16.2) for contacting the guiding rail element (15) at least temporarily when the trolley (16) is mounted on the guiding rail, wherein by said contacting means (16.2), a clearance between the engaging element (16.1) and the guiding rail element (15) is at least partially adjustable.

7. Positioning system (10) according to any of claims 5 or 6,
**characterized in that,**
at least one engaging element (16.1) and/or at least one groove (15.2) is at least partially made from a friction reducing material, preferably a plastic, to reduce friction between the engaging element (16.1) and the guiding rail element (15) when the trolley (16) is moved along said guiding rail element (15).

8. Positioning system (10) according to any of the previous claims,
**characterized in that,**
said trolley (16) and/or said tool carrier (17) comprise at least one fixation means (18) and wherein said guiding rail element (15) comprises at least one fixation recess (19) and wherein, when said trolley (16) is mounted on said guiding rail element (15), at least one fixation means (18) is at least partially introducible into said fixation recess (19) to fix said trolley (16) to said guiding rail element (15) in at least one machining position (I), such that a movement of said trolley (16) relative to said guiding rail element (15) is prevented.

9. Positioning system (10) according to any of the previous claims,
**characterized in that,**
said guiding rail element (15) comprises at least one group of fixation recesses (19) to at least partially receive at least one fixation means (18) of said trolley (16) and/or said tool carrier (17) wherein the fixation recesses (19) of said group of fixation recesses (19) are arranged along a circular arc, preferably in equidistant angular intervals.

10. Positioning system (10) according to any of the previous claims,
**characterized in that,**
said tool carrier (17) comprises at least one receiving section (17.1) for at least partially receiving the machine tool (11), wherein preferably at least one receiving section (17.1) extends at least partially perpendicular to an extension of said guiding rail element (15) along a circumferential direction (U).

11. Positioning system (10) according to any of the previous claims,
**characterized in that,**
said tool carrier (17) comprises at least one tooling recess (17.2) for passing at least one tool of the machine tool (11) at least partially through the tool carrier (17), wherein preferably, said tooling recess (17.2) is formed in the same plane as at least one receiving section (17.1), wherein preferably
said tool carrier (17) comprises at least one guiding adapter (17.3) for additionally guiding at least one tool of the machine tool (11) after passing said tool through said tooling recess (17.2).

12. Positioning system (10) according to any of the previous claims,
**characterized in that,**
said tool carrier (17) comprises at least one contacting means (17.4) for contacting the inner surface (12) of the wind turbine blade (14) at least temporarily when the trolley (16) is fixed in a machining position (I) and/orsaid tool carrier (17) comprises at least one stabilization fin (20) for absorbing bending moments introduced into the tool carrier (17) when operating the machine tool (11).

13. Positioning system (10) according to any of the previous claims,
**characterized in that,**
at least one positioning aid (21) is comprised, wherein said positioning aid (21) is designed to indicate the position, preferably a center, of at least one blade insert (22) of the blade root section (13).

14. Method (100) for using a positioning system (10) according to any of the previous claims on a wind turbine, wherein the wind turbine comprises a nacelle and at least one wind turbine blade (14), wherein said wind turbine blade (14) is connected to the nacelle via a blade bearing (23), wherein at least the following steps are performed, preferably in the following order:
- attaching (110) the guiding rail element (15) to the blade bearing (23),
- mounting (120) the trolley (16) on said guiding rail element (15) and
- moving (130) the trolley (16) at least partially along said guiding rail element (15) in a machining position (I) .

15. Method (100) according to claim 14,
**characterized in that**
at least one of the following steps is comprised:
- At least temporarily fixing said trolley (16) to said guiding rail element (15) in at least one machining position (I), such that a movement of said trolley (16) relative to said guiding rail element (15) is prevented, preferably by at least partially introducing at least one fixation means (18) of the trolley (16) or the tool carrier (17) into a fixation recess (19) of the guiding rail element (15),
- at least temporarily contacting the inner surface (12) of the wind turbine blade (14) when the trolley (16) is fixed in a machining position (I), preferably by a contacting means (17.4) of the tool carrier (17),
- using at least one positioning aid (21) for aligning at least one fixing recess (19) of the guiding rail element (15) with the center of at least one blade insert (22) of the wind turbine blade (14) at least with regard to a circumferential position of the center of the blade insert (22) and the center of the fixation recess (19).
